# EUROPEAN PATENT APPLICATION

(11) **EP 4 790 812 A1**
(43) Date of publication of application: **12.08.2026**
(21) Application number: 25867182.5
(22) Date of filing: 21.10.2025
(51) Int. Cl.: H01M 50/291, H01M 10/658, H01M 50/30

(54) **BATTERY MODULE**

(30) Priority: 18.12.2024 KR 20240190559
(71) Applicant: LG ENERGY SOLUTION, LTD., Seoul 07335 (KR)
(72) Inventor: PARK, Cheol Eun, Daejeon 34122 (KR)
(74) Representative: Plasseraud IP
(86) International application number: PCT/KR2025/016687
(87) International publication number: WO 2026/134600

(57) **Abstract**

A battery module of the present disclosure may include a first battery cell stack including a stack of a plurality of first battery cells; a second battery cell stack including a stack of a plurality of second battery cells, the first battery cell stack and the second battery cell stack being arranged along a direction; a lower frame accommodating the first battery cell stack and the second battery cell stack, the lower frame having an open top; and an upper frame covering the first battery cell stack and the second battery cell stack, the upper frame being connected to the lower frame. The upper frame may have a plurality of slits that penetrate the upper frame completely, and a portion of the upper frame adjacent to the plurality of slits may rupture in response to thermal energy being concentrated at or above a predetermined value.

## Description

### TECHNICAL FIELD

### CROSS-REFERENCE TO RELATED APPLICATIONS

This application is based on and claims priority from Korean Patent Application No. 10-2024-0190559 filed on December 18, 2024 with the Korean Intellectual Property Office, the disclosure of which is incorporated herein in its entirety by reference.

### TECHNICAL FIELD

The present disclosure relates to a battery module, and more particularly, to a battery module with an upper frame having a plurality of slits to reduce the area of thermal energy transfer and concentrate thermal energy at the plurality of slits to induce the rupture of a portion of the upper frame adjacent to the plurality of slits.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies for solar, wind or tidal energy, and attention is directed toward energy storage devices such as batteries to use the produced electrical energy more efficiently.

Secondary batteries are attracting attention as an energy source for different types of products including mobile devices and electric vehicles. Secondary batteries are considered as good energy resources that replace the use of traditional products using fossil fuels, and they do not generate by-products from the use of energy, which makes them get attention as an eco-friendly energy source.

Due to their high energy density, secondary batteries may generate heat during charging and discharging. The high temperature condition may accelerate degradation of active materials and electrolyte decomposition, resulting in shorter battery life and lower efficiency. Furthermore, when the temperature is higher than a predetermined level, thermal runaway may occur, and thermal propagation to adjacent battery cells may lead to large scale fires or explosions. To address this issue, effective thermal management in secondary batteries is under technological development.

### DISCLOSURE

### TECHNICAL PROBLEM

The present disclosure is designed to address the above-described problems and therefore the present disclosure is directed to providing a battery module with an upper frame having a plurality of slits to reduce the area of thermal energy transfer and concentrate thermal energy at the plurality of slits to induce the rupture of a portion of the upper frame adjacent to the plurality of slits.

### TECHNICAL SOLUTION

A battery module according to an embodiment of the present disclosure may include a first battery cell stack including a stack of a plurality of first battery cells; a second battery cell stack including a stack of a plurality of second battery cells, the first battery cell stack and the second battery cell stack being arranged along a direction; a lower frame accommodating the first battery cell stack and the second battery cell stack, the lower frame having an open top; and an upper frame covering the first battery cell stack and the second battery cell stack, the upper frame being connected to the lower frame. The upper frame may have a plurality of slits that penetrate the upper frame completely, and a portion of the upper frame adjacent to the plurality of slits may rupture in response to thermal energy being concentrated at or above a predetermined value.

The battery module may further include a center wall disposed within the lower frame and positioned between the first battery cell stack and the second battery cell stack, and the center wall may overlap the plurality of slits.

Each of the plurality of slits may extend in a first direction in which the first battery cell stack and the second battery cell stack are spaced apart from each other, and the plurality of slits may be spaced apart from each other in a second direction perpendicular to the first direction.

Each of the plurality of slits may have a quadrilateral shape.

The plurality of slits may include first slits and second slits arranged in the second direction, spaced apart from each other, and the first slits and the second slits may be arranged in an alternating manner along the second direction.

Each of the first slits and the second slits may have a shape of a trapezoid including first and second bases parallel to each other and first and second legs connecting the first and second bases, and the first base may be shorter than the second base.

A length of the first base may be equal to or larger than 1/3 and equal to or smaller than 2/3 of a length of the second base.

In the first slit having the second base spaced apart from the first base in the first direction, the first leg of the first slit may extend from the first base in a direction that crosses the first direction and an opposite direction of the second direction and connect to the second base, and the second leg of the first slit may extend from the first base in a direction that crosses the first direction and the second direction and connect to the second base.

In the second slit having the first base spaced apart from the second base in the first direction, the first leg of the second slit may extend from the second base in a direction that crosses the first direction and an opposite direction of the second direction and connect to the first base, and the second leg of the second slit may extend from the second base in a direction that crosses the first direction and the second direction and connect to the first base.

The first leg of the first slit may be adjacent to the first leg of the second slit close to the first leg of the first slit, and the second leg of the first slit may be adjacent to the second leg of the second slit close to the second leg of the first slit.

The first base of the first slit may overlap the second slit in the second direction, and the first base of the second slit may overlap the first slit in the second direction.

A portion of the upper frame that is adjacent to the plurality of slits and ruptures in response to the concentrated thermal energy may be defined as a rupture portion, and a thickness of the rupture portion adjacent to the second base of the first slit may be larger than a thickness of the rupture portion adjacent to the first base of the first slit.

The thickness of the rupture portion adjacent to the second base of the first slit may be 1.5 to 3 times larger than the thickness of the rupture portion adjacent to the first base of the first slit.

The thickness of the rupture portion may vary with a step.

The thickness of the rupture portion may gradually decrease from the second base of the first slit toward the first base of the first slit.

The upper frame may further have a venting hole that penetrates the upper frame completely, and the venting hole may overlap the first battery cell stack and the second battery cell stack.

### ADVANTAGEOUS EFFECTS

According to the above description, when the upper frame has the plurality of slits, the area of thermal energy transfer may be reduced and thermal energy may be allowed to concentrate at the plurality of slits. When thermal energy of the predetermined level or above is generated from the first battery cell stack or the second battery cell stack, the thermal energy may be concentrated at a portion of the upper frame adjacent to the plurality of slits and the portion of the upper frame adjacent to the plurality of slits may rupture. As a result, it may be possible to prevent the transfer of thermal energy from the first battery cell stack or the second battery cell stack body to the second battery cell stack or the first battery cell stack.

### BRIEF DESCRIPTION OF THE DRAWINGS

FIG. 1 is an exploded perspective view of a battery module according to an embodiment of the present disclosure.
FIG. 2 is a plan view of an upper frame according to an embodiment of the present disclosure.
FIG. 3 is an exploded schematic view of section AA' in FIG. 2.
FIG. 4 is an exploded schematic view of section AA' in FIG. 2.
FIG. 5 is a cross-sectional view of FIG. 4, taken along the line I-I'.
FIG. 6 is a cross-sectional view of FIG. 4, taken along the line I-I'.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

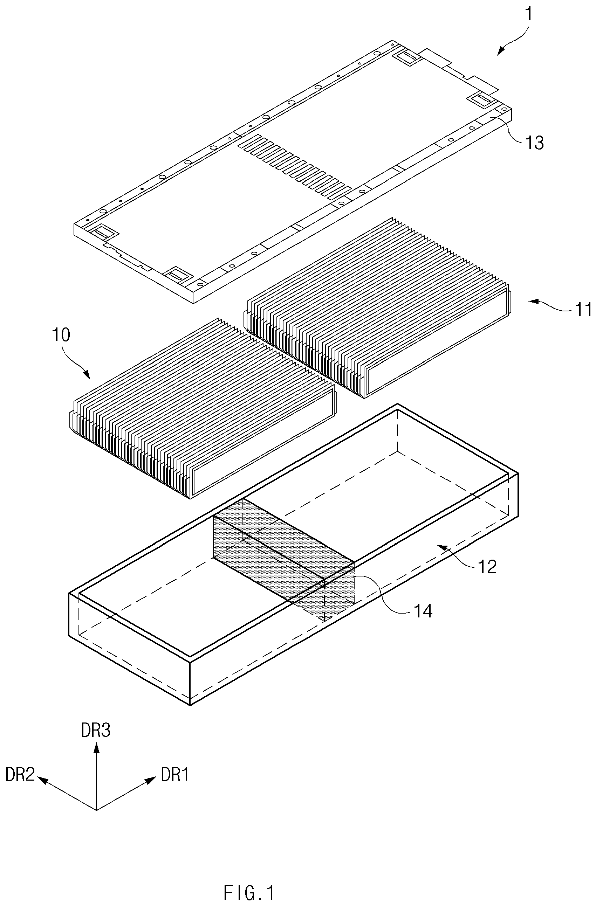

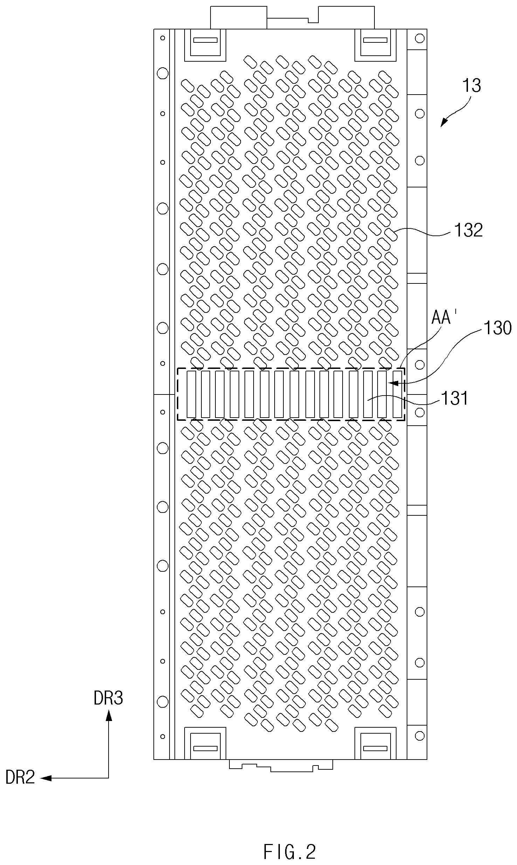

FIG. 1 is an exploded perspective view of a battery module 1 according to an embodiment of the present disclosure. FIG. 2 is a plan view of an upper frame 13 according to an embodiment of the present disclosure.

Referring to FIGS. 1 and 2, the battery module 1 includes a first battery cell stack 10, a second battery cell stack 11, a lower frame 12, a center wall 14 and an upper frame 13.

The first battery cell stack 10 may include a stack of a plurality of first battery cells, and the second battery cell stack 11 may include a stack of a plurality of second battery cells. The first battery cell stack 10 and the second battery cell stack 11 may be arranged along a direction, spaced apart from each other. In addition to the plurality of battery cells, the first and second battery cell stacks 10, 11 may further include a busbar assembly or an insulating cover.

The lower frame 12 may has an open top, and the open top may be connected to the upper frame 13. The lower frame 12 may accommodate the first battery cell stack 10 and the second battery cell stack 11. The lower frame 12 may further accommodate the center wall 14 inside. The center wall 14 may be positioned between the first battery cell stack 10 and the second battery cell stack 11. That is, the first battery cell stack 10 and the second battery cell stack 11 may be spatially separated by the center wall 14. When a fire occurs in the first battery cell stack 10 or the second battery cell stack 11, the transfer of thermal energy to the adjacent second battery cell stack 11 or the adjacent first battery cell stack 10 may be delayed or prevented.

The upper frame 13 may be disposed on the lower frame 12 and connected to the lower frame 12. The upper frame 13 may cover the first battery cell stack 10 and the second battery cell stack 11, and may also cover the center wall 14. The upper frame 13 may have a plurality of slits 131 that penetrate the upper frame 13 completely.

The plurality of slits 131 may overlap the center wall 14 on a plane. For example, the plurality of slits 131 and the center wall 14 may overlap in a third direction DR3. The third direction DR3 may be defined as a normal direction of a plane formed by a first direction DR1 and a second direction DR2. In this specification, the first direction DR1, the second direction DR2 and the third direction DR3 are for illustration purposes, and the first to third directions DR1, DR2, DR3 may be relative directions.

A portion of the upper frame 13 that is located adjacent to the plurality of slits 131 and ruptures when thermal energy is concentrated at or above a predetermined value may be defined as a rupture portion 130. Because the upper frame 13 covers the first battery cell stack 10 and the second battery cell stack 11 at the same time, in case where the upper frame 13 does not have the plurality of slits 131, heat generated from the first battery cell stack 10 or the second battery cell stack 11 may be quickly transferred to the second battery cell stack 11 or the first battery cell stack 10 through the upper frame 13. In the present disclosure, as the upper frame 13 has the plurality of slits 131, the area of thermal energy transfer may be reduced and thermal energy may be allowed to concentrate at the plurality of slits 131. Accordingly, when thermal energy of the predetermined level or above is generated from the first battery cell stack 10 or the second battery cell stack 11, the thermal energy may be concentrated at the portion 130 (or the rupture portion) of the upper frame adjacent to the plurality of slits 131, and the portion 130 (or the rupture portion) of the upper frame adjacent to the plurality of slits 131 may rupture. As a result, it may be possible to prevent the transfer of thermal energy from the first battery cell stack 10 or the second battery cell stack 11 to the second battery cell stack 11 or the first battery cell stack 10.

The upper frame 13 may further have a venting hole 132 that penetrates the upper frame 13 completely. The venting hole 132 may overlap the first battery cell stack 10 and the second battery cell stack 11 on a plane. That is, the venting hole 132 may overlap the first battery cell stack 10 and the second battery cell stack 11 in the third direction DR3. The venting hole 132 may be a passage through which gas is released to the atmosphere in the event of a fire in the first battery cell stack 10 or the second battery cell stack 11.

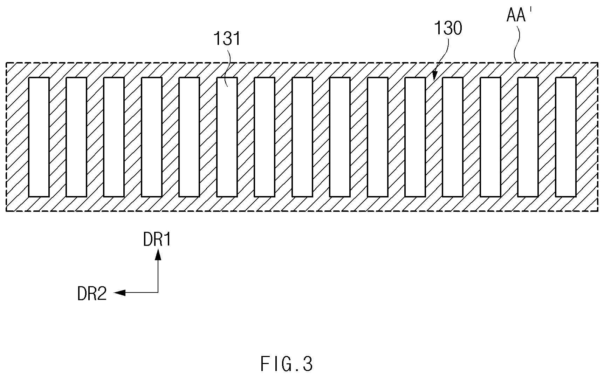

FIG. 3 is an exploded schematic view of section AA' in FIG. 2.

Referring to FIG. 3, the plurality of slits 131 and the rupture portion 130 of the upper frame 13 adjacent to the plurality of slits 131 may have a shape that is easy to rupture when thermal energy is concentrated at or above the predetermined value. Each of the plurality of slits 131 may extend in the first direction DR1 in which the first battery cell stack 10 and the second battery cell stack 11 are spaced apart from each other, and the plurality of slits may be spaced apart from each other in the second direction DR2. Each of the plurality of slits 131 may have a quadrilateral shape.

When heat is generated at one side of the upper frame 13 (on the first battery cell stack 10 or the second battery cell stack 11), thermal energy may be concentrated at the portion 130 of the upper frame between the plurality of slits 131, causing local temperature increases, and the portion 130 of the upper frame adjacent to the plurality of slits 131 may break by itself, thereby preventing the transfer of thermal energy to the other side of the upper frame 13 (on the second battery cell stack 11 or the first battery cell stack 10).

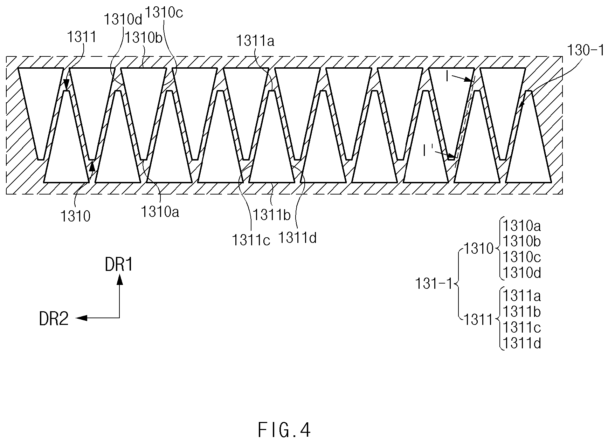

FIG. 4 is an exploded schematic view of section AA' in FIG. 2.

Referring to FIGS. 2 and 4, the plurality of slits 131-1 and the rupture portion 130-1 of the upper frame 13 adjacent to the plurality of slits 131-1 may have a shape that is easy to rupture when thermal energy is concentrated at or above the predetermined value. Each of the plurality of slits 131-1 may extend in the first direction DR1 in which the first battery cell stack 10 and the second battery cell stack 11 are spaced apart from each other, and the plurality of slits may be spaced apart from each other in the second direction DR2. The plurality of slits 131-1 may include first slits 1310 and second slits 1311. Each of the first slits 1310 and the second slits 1311 may be arranged in the second direction DR2, spaced apart from each other.

When heat is generated at one side of the upper frame 13 (on the first battery cell stack 10 or the second battery cell stack 11), thermal energy may be concentrated at the portion 130-1 of the upper frame between the plurality of slits 131-1, causing local temperature increases, and the portion 130-1 of the upper frame adjacent to the plurality of slits 131-1 may break by itself, thereby preventing the transfer of thermal energy to the other side of the upper frame 13 (on the second battery cell stack 11 or the first battery cell stack 10).

Each of the first slits 1310 may have a shape of a trapezoid including first and second bases 1310a, 1310b parallel to each other and first and second legs 1310c, 1310d connecting the first and second bases 1310a, 1310b. Each of the second slits 1311 may have a shape of a trapezoid including first and second bases 1311a, 1311b parallel to each other and first and second legs 1311c, 1311d connecting the first and second bases 1311a, 1311b.

When the second base 1310b of the first slit 1310 is spaced apart from the first base 1310a in the first direction DR1, the first leg 1310c of the first slit 1310 may extend from the first base 1310a in a direction that crosses the first direction DR1 and the opposite direction of the second direction DR2 and connect to the second base 1310b. The second leg 1310d of the first slit 1310 may extend from the first base 1310a in a direction that crosses the first direction DR1 and the second direction DR2 and connect to the second base 1310b.

When the first base 1311a of the second slit 1311 is spaced apart from the second base 1311b in the first direction DR1, the first leg 1311c of the second slit 1311 may extend from the second base 1311b in a direction that crosses the first direction DR1 and the opposite direction of the second direction DR2 and connect to the first base 1311a. The second leg 1311d of the second slit 1311 may extend from the second base in a direction that crosses the first direction DR1 and the second direction DR2 and connect to the first base 1311a.

The shape of the first slit 1310 and the shape of the second slit 1311 may be substantially the same. The shape of the first slits 1310 may be a reflection of the shape of the second slits 1311 by the line symmetry with respect to an axis parallel to the second direction DR2.

The first base 1310a of the first slit 1310 may be shorter than the second base 1310b of the first slit 1310. The first base 1311a of the second slit 1311 may be shorter than the second base 1311b of the second slit 1311. In an embodiment, the length of the first bases 1310a, 1311a may be equal to or larger than 1/3 and equal to or smaller than 2/3 of the length of the second bases 1310b, 1311b, respectively. For example, the length of the first bases 1310a, 1311a may be 1/2 of the length of the second bases 1310b, 1311b, respectively.

The first slits 1310 and the second slits 1311 may be arranged in an alternating manner along the second direction DR2. For example, one first slit 1310, one second slit 1311, another first slit 1310 and another second slit 1311 may be repeatedly arranged in that order. That is, the first leg 1310c of the first slit 1310 may be adjacent to the first leg 1311c of the second slit 1311 close to the first leg 1310c of the first slit 1310, and the second leg 1310d of the first slit 1310 may be adjacent to the second leg 1311d of the second slit 1311 close to the second leg 1310d of the first slit 1310.

Parts of the first slits 1310 and parts of the second slits 1311 may overlap. For example, the first base 1310a of the first slit 1310 may overlap the second slit 1311 in the second direction DR2, and the first base 1311a of the second slit 1311 may overlap the first slit 1310 in the second direction DR2.

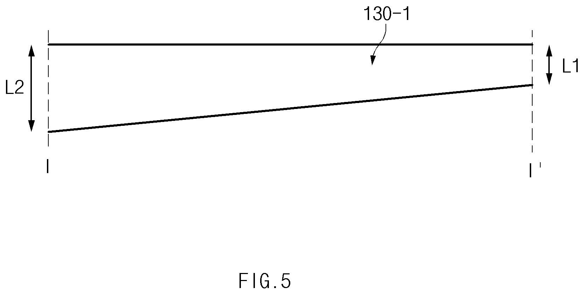

FIG. 5 is a cross-sectional view of FIG. 4, taken along the line I-I'.

Referring to FIGS. 4 and 5, a thickness L2 of the rupture portion 130-1 adjacent to the second base 1310b of the first slit 1310 may be larger than a thickness L1 of the rupture portion 1310-1 adjacent to the first base 1310a of the first slit 1310. In an embodiment, the thickness L2 of the rupture portion 130-1 adjacent to the second base 1310b of the first slit 1310 may be 1.5 to 3 times larger than the thickness L1 of the rupture portion 130-1 adjacent to the first base 1310a of the first slit 1310. For example, the thickness L2 of the rupture portion 130-1 adjacent to the second base 1310b of the first slit 1310 may be twice as large as the thickness L1 of the rupture portion 130-1 adjacent to the first base 1310a of the first slit 1310. The thickness of the rupture portion 130-1 may gradually decrease from the second base 1310b of the first slit 1310 toward the first base 1310a of the first slit 1310.

The description of the thickness of the second slit 1311 may be substantially the same as the description of the thickness of the first slit 1310. The thickness of the rupture portion 130-1 adjacent to the second base 1311b of the second slit 1311 may be larger than the thickness of the rupture portion 130-1 adjacent to the first base 1311a of the second slit 1311. In an embodiment, the thickness L2 of the rupture portion 130-1 adjacent to the second base 1311b of the second slit 1311 may be 1.5 to 3 times larger than the thickness L1 of the rupture portion 130-1 adjacent to the first base 1311 of the second slit 1311. For example, the thickness L2 of the rupture portion 130-1 adjacent to the second base 1311b of the second slit 1311 may be twice as large as the thickness L1 of the rupture portion 130-1 adjacent to the first base 1311a of the second slit 1311. The thickness of the rupture portion 130-1 may gradually decrease as it does from the second base 1311b of the second slit 1311 toward the first base 1311a of the second slit 1311.

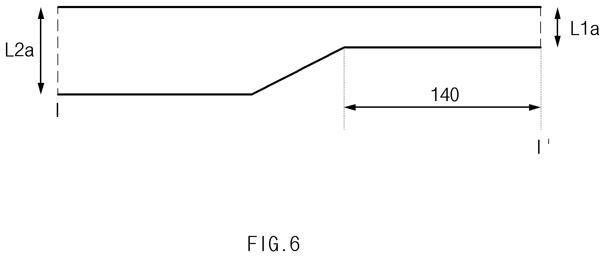

FIG. 6 is a cross-sectional view of FIG. 4, taken along the line I-I'.

Referring to FIGS. 4 and 6, the thickness L2a of the rupture portion 130-1 adjacent to the second base 1310b of the first slit 1310 may be larger than the thickness L1a of the rupture portion 1310 adjacent to the first base 1310a of the first slit 1310. In an embodiment, the thickness L2a of the rupture portion 130-1 adjacent to the second base 1310b of the first slit 1310 may be 1.5 to 3 times larger than the thickness L1a of the rupture portion 130-1 adjacent to the first base 1310a of the first slit 1310. For example, the thickness L2a of the rupture portion 130-1 adjacent to the second base 1310b of the first slit 1310 may be twice as large as the thickness L1a of the rupture portion 130-1 adjacent to the first base 1310a of the first slit 1310. The thickness of the rupture portion 130-1 may vary with a step.

The description of the thickness of the second slit 1311 may be substantially the same as the description of the thickness of the first slit 1310. The thickness of the rupture portion 130-1 adjacent to the second base 1311b of the second slit 1311 may be larger than the thickness of the rupture portion 130-1 adjacent to the first base 1311a of the second slit 1311. In an embodiment, the thickness of the rupture portion 130-1 adjacent to the second base 1311b of the second slit 1311 may be 1.5 to 3 times larger than the thickness of the rupture portion 130-1 adjacent to the first base 1311a of the second slit 1311. For example, the thickness of the rupture portion 130-1 adjacent to the second base 1311b of the second slit 1311 may be twice as large as the thickness of the rupture portion 130-1 adjacent to the first base 1311a of the second slit 1311. The thickness of the rupture portion 130-1 may vary with a step. An area 140 where a constant thickness is maintained may be an area where the first slit 1310 and the second slit 1311 overlap in the second direction DR2.

Although the present disclosure has been hereinabove described with regard to certain embodiments and drawings, the present disclosure is not limited thereto, and a variety of modifications and changes may be made by persons having ordinary skill in the technical field pertaining to the present disclosure within the technical aspects of the present disclosure and the appended claims and their equivalents.

### [List of Reference Numerals]

1: Battery module
10: First battery cell stack
11: Second battery cell stack
12: Lower frame
13: Upper frame
130, 130-1: Rupture portion
131, 131-1: A plurality of slits
1310: First slit
1310a: First base of first slit
1310b: Second base of first slit
1310c: First leg of first slit
1310d: Second leg of first slit
1311: Second slit
1311a: First base of second slit
1311b: Second base of second slit
1311c: First leg of second slit
1311d: Second leg of second slit
132: Venting hole
14: Center wall

## Claims

1. A battery module comprising:
a first battery cell stack including a stack of a plurality of first battery cells;
a second battery cell stack including a stack of a plurality of second battery cells, the first battery cell stack and the second battery cell stack being arranged along a direction;
a lower frame accommodating the first battery cell stack and the second battery cell stack, the lower frame having an open top; and
an upper frame covering the first battery cell stack and the second battery cell stack, the upper frame being connected to the lower frame,
wherein the upper frame has a plurality of slits that penetrate the upper frame completely, and a portion of the upper frame adjacent to the plurality of slits ruptures in response to thermal energy being concentrated at or above a predetermined value.

2. The battery module according to claim 1, further comprising:
a center wall disposed within the lower frame and positioned between the first battery cell stack and the second battery cell stack,
wherein the center wall overlaps the plurality of slits.

3. The battery module according to claim 1,
wherein each of the plurality of slits extends in a first direction in which the first battery cell stack and the second battery cell stack are spaced apart from each other, and the plurality of slits are spaced apart from each other in a second direction perpendicular to the first direction.

4. The battery module according to claim 3,
wherein each of the plurality of slits has a quadrilateral shape.

5. The battery module according to claim 3,
wherein the plurality of slits includes first slits and second slits arranged in the second direction, spaced apart from each other, and the first slits and the second slits are arranged in an alternating manner along the second direction.

6. The battery module according to claim 5,
wherein each of the first slits and the second slits has a shape of a trapezoid including first and second bases parallel to each other and first and second legs connecting the first and second bases, respectively, and the first base is shorter than the second base.

7. The battery module according to claim 6,
wherein a length of the first base is equal to or larger than 1/3 and equal to or smaller than 2/3 of a length of the second base.

8. The battery module according to claim 6,
wherein, in the first slit having the second base spaced apart from the first base in the first direction, the first leg of the first slit extends from the first base in a direction that crosses the first direction and an opposite direction of the second direction and connects to the second base, and the second leg of the first slit extends from the first base in a direction that crosses the first direction and the second direction and connects to the second base.

9. The battery module according to claim 6,
wherein, in the second slit having the first base spaced apart from the second base in the first direction, the first leg of the second slit extends from the second base in a direction that crosses the first direction and an opposite direction of the second direction and connects to the first base, and the second leg of the second slit extends from the second base in a direction that crosses the first direction and the second direction and connects to the first base.

10. The battery module according to claim 6,
wherein the first leg of the first slit is adjacent to the first leg of the second slit close to the first leg of the first slit, and the second leg of the first slit is adjacent to the second leg of the second slit close to the second leg of the first slit.

11. The battery module according to claim 6,
wherein the first base of the first slit overlaps the second slit in the second direction, and the first base of the second slit overlaps the first slit in the second direction.

12. The battery module according to claim 6,
wherein a portion of the upper frame that is adjacent to the plurality of slits and ruptures in response to the concentrated thermal energy is defined as a rupture portion, and
wherein a thickness of the rupture portion adjacent to the second base of the first slit is larger than a thickness of the rupture portion adjacent to the first base of the first slit.

13. The battery module according to claim 12,
wherein the thickness of the rupture portion adjacent to the second base of the first slit is 1.5 to 3 times larger than the thickness of the rupture portion adjacent to the first base of the first slit.

14. The battery module according to claim 12,
wherein the thickness of the rupture portion varies with a step.

15. The battery module according to claim 12,
wherein the thickness of the rupture portion gradually decreases from the second base of the first slit toward the first base of the first slit.

16. The battery module according to claim 1,
wherein the upper frame further has a venting hole that penetrates the upper frame completely, and the venting hole overlaps the first battery cell stack and the second battery cell stack.
